# EUROPEAN PATENT APPLICATION

(11) **EP 2 775 175 A1**
(43) Date of publication of application: **10.09.2014**
(21) Application number: 12845581.3
(22) Date of filing: 19.10.2012
(51) Int. Cl.: F16J 15/32, F16F 9/36

(54) **SEALING DEVICE AND DAMPER WITH SEALING DEVICE**

(30) Priority: 01.11.2011 JP 2011239845
(71) Applicant: Kayaba Industry Co., Ltd., Tokyo 105-6111 (JP)
(72) Inventor: OZAKI, Shinji, Tokyo 105-6111 (JP); SAITA, Shusaku, Tokyo 105-6111 (JP); ITO, Kiyoaki, Tokyo 105-6111 (JP); IMOTO, Chikashi, Tokyo 105-6111 (JP)
(74) Representative: Grünecker, Kinkeldey, Stockmair & Schwanhäusser
(86) International application number: PCT/JP2012/077100
(87) International publication number: WO 2013/065505

(57) **Abstract**

A sealing device adapted to seal an outer periphery of a shaft member inserted into a tubular member includes a dust seal lip arranged on an outer side of the tubular member and an oil seal lip arranged on an inner side of the tubular member to form a space for accumulating working fluid between the oil seal lip and the dust seal lip. The dust seal lip includes a main lip portion and an auxiliary lip portion formed to be closer to the oil seal lip than the main lip portion. A maximum value of a surface pressure gradient absolute value of the inner side in the auxiliary lip portion is set to be larger than that of a surface pressure gradient absolute value of the outer side in the auxiliary lip portion.

## Description

### TECHNICAL FIELD

The present invention relates to an improvement of a sealing device and a shock absorber with this sealing device.

### BACKGROUND ART

A sealing device is used in a shock absorber for suppressing the vibration of a transport equipment or a building, a hydraulic drive cylinder device or the like and seals working fluid stored in the shock absorber, the cylinder device or the like.

For example, JP2006-17161A discloses a sealing device used in a shock absorber for suspension for suppressing the transmission of vibration caused by uneven road surface to a vehicle body of an automotive vehicle by being interposed between the vehicle body and wheels.

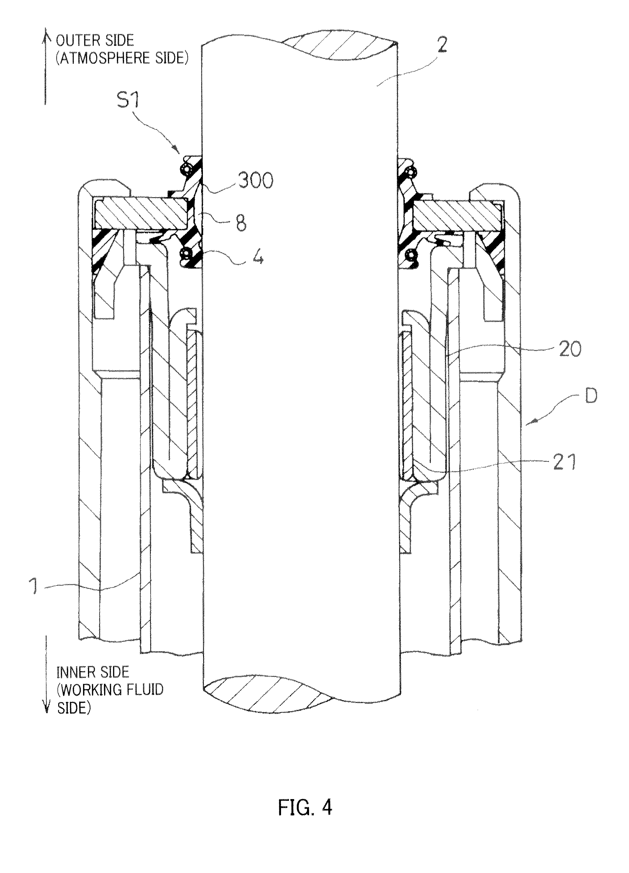

As shown in FIG. 4, the above sealing device S1 seals the outer periphery of a piston rod (shaft member) 2 movably inserted into a cylinder (tubular member) 1 in a shock absorber D. The sealing device S1 is laminated on an outer side (atmosphere side) than an annular rod guide 20, with the inner periphery of which a bearing 21 axially supporting the piston rod 2 is annularly engaged.

The sealing device S1 further includes a dust seal lip 300 arranged on the outer side (atmosphere side) and an oil seal lip 4 arranged on an inner side (working fluid side). The sealing device S1 scrapes off foreign substances adhering to the outer peripheral surface of the piston rod 2 by the dust seal lip 300 and scrapes off the working fluid adhering to the outer peripheral surface of the piston rod 2 by the oil seal lip 4. In this way, the sealing device S1 prevents the entrance of foreign substances on the outer side (atmosphere side) of the shock absorber D into the cylinder 1 and prevents the outflow of the working fluid in the cylinder 1 to outside.

The shock absorber D including the above sealing device S1 includes the cylinder 1 for storing the working fluid, the piston rod 2 to be movably inserted into the cylinder 1, a piston (not shown) held on the piston rod 2 to partition the interior of the cylinder 1 into two chambers filled with the working fluid, a flow path (not shown) allowing communication between these two chambers and a damping force generation mechanism (not shown) for applying predetermined resistance to the working fluid passing along this flow path.

During the expansion and contraction of the shock absorber D during which the piston rod 2 moves relative to the cylinder 1, the working fluid in one chamber passes along the flow path to move to the other chamber. This enables the shock absorber D to generate a damping force resulting from the resistance of the damping force generation mechanism when the working fluid passes along the flow path.

A laminated leaf valve, an orifice or the like is used as the damping force generation mechanism. Since the shock absorber D needs to include a sliding portion between the unillustrated piston and the cylinder 1, a sliding portion between the piston rod 2 and the bearing 21 and the like, functional clearances have to be provided in these sliding portions. However, since the presence of the clearances causes slight leakage of the working fluid, it is difficult for the damping force generation mechanism to generate a sufficient damping force when the shock absorber D operates at a very low speed or at a very small amplitude.

Accordingly, the damping force that is insufficient when the shock absorber D operates at a very low speed or at a very small amplitude is compensated by adopting a high-friction oil seal for increasing a frictional force generated by the oil seal lip 4 in the shock absorber D for suspension as described above.

The high-friction oil seal is realized by increasing a coefficient of friction of a seal material, increasing a force (strained force) of the oil seal lip 4 tightening the piston rod 2 or using working fluid of a type to suppress slippage in the sliding portions.

### SUMMARY OF INVENTION

However, in the case of adopting the high-friction oil seal, the working fluid present on sliding surfaces between the oil seal lip 4 and the piston rod 2 may be pushed out to cause oil film breakage and the oil seal lip 4 and the piston rod 2 may adhere if the shock absorber D is left in an inoperative state for an extended period of time such as when the vehicle is kept parked over an extended period of time.

If the shock absorber D is operated (extended) in this state, there is a possibility that a clearance (hereinafter, referred to as an opening) is formed on partial circumferences of contact surfaces of the oil seal lip 4 and the piston rod 2 and the working fluid leaks.

The working fluid leaked out from the oil seal lip 4 is temporarily accumulated in a space 8 formed between the oil seal lip 4 and the dust seal lip 300.

However, since the dust seal lip 300 is so shaped that a working fluid film during a compression stroke in which the piston rod 2 enters the cylinder 1 is set to be thinner than that during an extension stroke of the piston rod 2 in which the piston rod 2 exits from the cylinder 1, there is a possibility that the working fluid in the space 8 is gradually scraped out to the outer side (atmosphere side) and working fluid leakage occurs to bring discomfort to a user.

It should be noted that since the working fluid leakage in this case only occurs when the vehicle is suddenly moved after being left unattended for an extended period of time and a tiny amount of the working fluid leaks out, it is different from progressive working fluid leakage which occurs when the outer periphery of the piston rod 2 is scratched.

The present invention aims to provide a sealing device capable of restraining working fluid leaked out from an oil seal lip from being scraped out to an outer side even if a high-friction oil seal is adopted and an opening occurs.

According to one aspect of the present invention, a sealing device adapted to seal an outer periphery of a shaft member movably inserted into a tubular member storing working fluid is provided. The sealing device includes a dust seal lip arranged on an outer side of the tubular member to prevent the entrance of foreign substances; and an oil seal lip arranged on an inner side of the tubular member to form a space for accumulating the working fluid between the oil seal lip and the dust seal lip and prevent the outflow of the working fluid; wherein the dust seal lip includes a main lip portion and an auxiliary lip portion formed to be closer to the oil seal lip than the main lip portion; and a maximum value of a surface pressure gradient absolute value of the inner side in the auxiliary lip portion is set to be larger than that of a surface pressure gradient absolute value of the outer side in the auxiliary lip portion.

Embodiments of the present invention and advantages thereof are described in detail below with reference to the accompanying drawings.

### BRIEF DESCRIPTION OF DRAWINGS

FIG. 1 is a longitudinal sectional view partially showing a shock absorber with a sealing device according to an embodiment of the present invention,
FIG. 2 is a longitudinal sectional view enlargedly showing a main lip portion and an auxiliary lip portion of a dust seal lip,
FIG. 3A is a longitudinal sectional view enlargedly showing a dust seal lip part with a press-contact state with the outer peripheral surface of a piston rod shown in solid line and a free state shown in broken line,
FIG. 3B is a graph showing a relationship between lip position and surface pressure in the dust seal lip,
FIG. 3C is a graph showing a relationship between lip position and surface pressure gradient in the dust seal lip, and
FIG. 4 is a longitudinal sectional view partially showing a shock absorber with a sealing device according to a comparative example.

### DESCRIPTION OF EMBODIMENTS

Hereinafter, an embodiment of the present invention is described with reference to the drawings. The same reference signs assigned through several drawings denote the same or corresponding components.

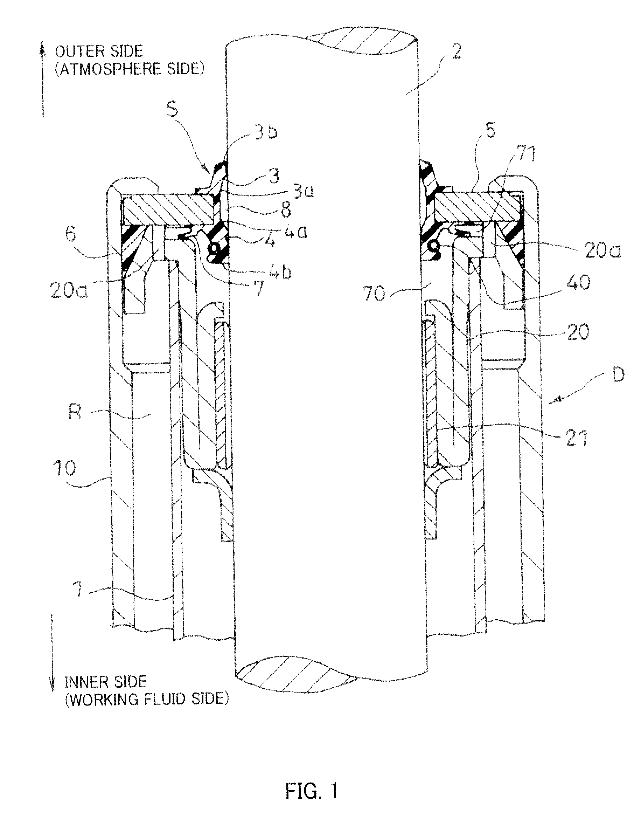

As shown in FIG. 1, a sealing device S seals the outer periphery of a piston rod (shaft member) 2 movably inserted into a cylinder (tubular member) 1 storing working fluid. The sealing device S includes a dust seal lip 3 which is arranged on an outer side (atmosphere side) of the cylinder 1 to prevent the entrance of foreign substances and an oil seal lip 4 arranged on an inner side (working fluid side) of the cylinder 1 to prevent the outflow of the working fluid. A space for accumulating the working fluid is formed between the dust seal lip 3 and the oil seal lip 4.

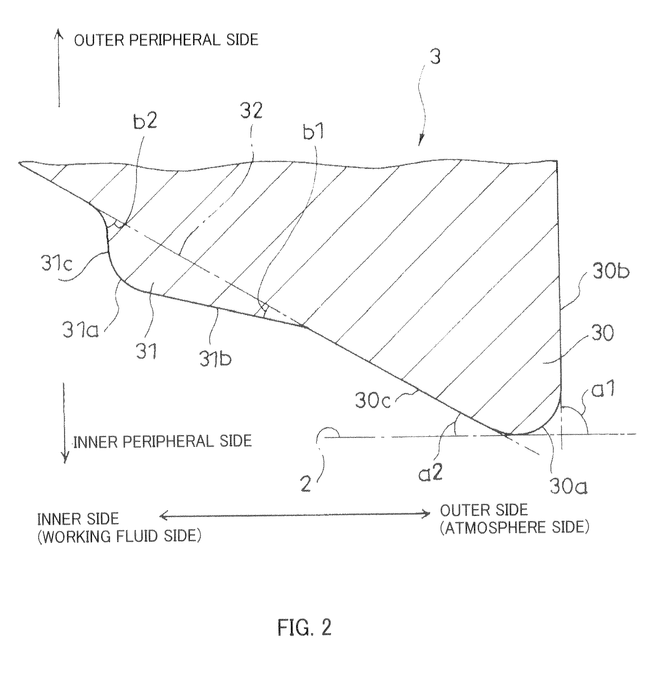

As shown in FIG. 2, the dust seal lip 3 includes a main lip portion 30 and an auxiliary lip portion 31 formed to be closer to an oil seal lip side (working fluid side) than the main lip portion 30. A maximum value of a surface pressure gradient absolute value of an inner side (working fluid side) in the auxiliary lip portion 31 is set to be larger than that of a surface pressure gradient absolute value of an outer side (atmosphere side) in the auxiliary lip portion 31.

The sealing device S is used in a shock absorber D for suspension of an automotive vehicle. The shock absorber D includes, as shown in FIG. 1, the cylinder 1 for storing the working fluid and the piston rod 2 movably inserted into the cylinder 1. The shock absorber D generates a predetermined damping force when the piston rod 2 moves in an axial direction in the cylinder 1.

The shock absorber D includes an outer tube 10 concentrically provided outside the cylinder 1 and a reservoir R formed between the outer tube 10 and the cylinder 1. The reservoir R stores the working fluid and gas and compensates for a volumetric change in the cylinder corresponding to the volume of the piston rod that enters and exits from the cylinder 1 and for a volumetric change of the working fluid due to a temperature change. It should be noted that the shock absorber D is not limited to the above configuration and may adopt any other known configuration.

The working fluid stored in the cylinder 1 and the reservoir R is liquid such as water, solution or mineral oil and the gas stored in the reservoir R is inert gas such as nitrogen.

The sealing device S is described in detail. The sealing device S includes an annular insert metal 5 laminated on a rod guide 20 for axially supporting the piston rod 2, the dust seal lip 3 mounted at an outer side (atmosphere side) of the inner periphery of the insert metal 5, the oil seal lip 4 mounted at an inner side (working fluid side) of the inner periphery of the insert metal 5, an outer peripheral seal 6 mounted on the outer periphery of the insert metal 5 and a check lip 7 mounted between the oil seal lip 4 and the outer peripheral seal 6 on an inner side surface of the insert metal 5 located on a lower side in FIG. 1. A space 8 is formed between the oil seal lip 4 and the dust seal lip 3.

The check lip 7 is annularly formed, can sit on and leave from an atmosphere side end surface of the rod guide 20, and partitions a clearance formed between the rod guide 20 and the sealing device S into an inner peripheral chamber 70 which is a chamber at an inner peripheral side and an outer peripheral chamber 71 which is a chamber at an outer peripheral side. The outer peripheral chamber 71 communicates with the reservoir R via a passage 20a formed in the rod guide 20. The working fluid scraped off by the oil seal lip 4 is accumulated in the inner peripheral chamber 70.

The check lip 7 permits the working fluid accumulated in the inner peripheral chamber 70 to move to the outer peripheral chamber 71, but prevents the working fluid and the gas in the reservoir R from moving to the inner peripheral chamber 70 via the outer peripheral chamber 71. In this way, the working fluid scraped off by the oil seal lip 4 can be returned into the cylinder 1 via the outer peripheral chamber 71 and the reservoir R and a reverse flow can be prevented.

The outer peripheral seal 6 is annularly formed and closes a clearance between the inner peripheral surface of the outer tube 10 and the outer peripheral surface of the rod guide 20. This can restrain the leakage of the working fluid and the gas to the outer side (atmosphere side) through the clearance between the rod guide 20 and the outer tube 10 and seal the outer periphery of the rod guide 20 (inner periphery of the outer tube).

The oil seal lip 4 is annularly formed, a base portion 4a is continuously connected to the inner periphery of the insert metal 5 and a tip 4b side extends obliquely toward the inner side (working fluid side) of the inner periphery. An annular lip portion (not indicated) corresponding to the tip 4b of the oil seal lip 4 is pressed into contact with the outer peripheral surface of the piston rod 2 by a garter spring 40.

In the following description, a stroke of the piston rod 2 to move to the outer side (atmosphere side), which is an upper side in FIG. 1, relative to the sealing device S is referred to as an extension stroke and a stroke of the piston rod 2 to move to the inner side (working fluid side), which is a lower side in FIG. 1, relative to the sealing device S is referred to as a compression stroke. A working fluid film formed during the expansion stroke by the oil seal lip 4 is set to be thinner than that formed during the compression stroke. This enables the oil seal lip 4 to prevent the outflow of the working fluid in the cylinder 1 to the outer side (atmosphere side).

The oil seal lip 4 is a high-friction oil seal and compensates for a damping force when the shock absorber D operates at a very low speed or at a very small amplitude by generating a high frictional force between the oil seal lip 4 and the piston rod 2. The oil seal lip 4 is realized by a known method such as by increasing a coefficient of friction of a material forming the oil seal lip 4, increasing a force (strained force) of the oil seal lip 4 tightening the piston rod 2 or using working fluid of a type to suppress the slippage of sliding portions.

The dust seal lip 3 is annularly formed, a base portion 3a is continuously connected to the inner periphery of the insert metal 5 and a tip 3b side extends obliquely toward the outer side (atmosphere side) of the inner periphery. As shown in FIG. 2, the annular main lip portion 30 and the annular auxiliary lip portion 31 formed to be closer to an oil seal lip side (working fluid side) than the main lip portion 30 are formed in series in an axial direction on the tip of the dust seal lip 3.

The inner periphery of the main lip portion 30 includes an outer inclined surface 30b inclined from a tip 30a thereof toward the outer side (atmosphere side) and an inner inclined surface 30c inclined from the tip 30a toward the inner side (working fluid side) and has a substantially triangular cross-section.

If an inner angle between the outer inclined surface 30b and the outer peripheral surface of the piston rod 2 is an angle of inclination a1 and an inner angle between the inner inclined surface 30c and the outer peripheral surface of the piston rod 2 is an angle of inclination a2 in the main lip portion 30 in a free state (state where the main lip portion 30 is not pressed into contact with the piston rod 2), the inclinations of the outer inclined surface 30b and the inner inclined surface 30c are so set that the angle of inclination a1 is larger than the angle of inclination a2.

The inner periphery of the auxiliary lip portion 31 includes an outer inclined surface 31b inclined from a tip 31a thereof toward the outer side (atmosphere side) and connected to the inner inclined surface 30c of the main lip portion 30 and an inner inclined surface 31c inclined from the tip 31a toward the inner side (working fluid side) and has a substantially triangular cross-section.

When an imaginary line 32 is drawn from an end edge of the inner inclined surface 31c to that of the outer inclined surface 31b in the auxiliary lip portion 31 in a free state (state where the auxiliary lip portion 31 is not pressed into contact with the piston rod 2), if an inner angle between this imaginary line 32 and the outer inclined surface 31b is an angle of inclination b1 and an inner angle between the imaginary line 32 and the inner inclined surface 31c is an angle of inclination b2, the inclinations of the outer inclined surface 31b and the inner inclined surface 31c are so set that the angle of inclination b1 is smaller than the angle of inclination b2.

An inner angle between the outer inclined surface 31b and the inner inclined surface 31c of the auxiliary lip portion 31 is set at about 110° and a radius of curvature of the tip 31a of the auxiliary lip portion 31 is set to be shorter than 0.2 mm.

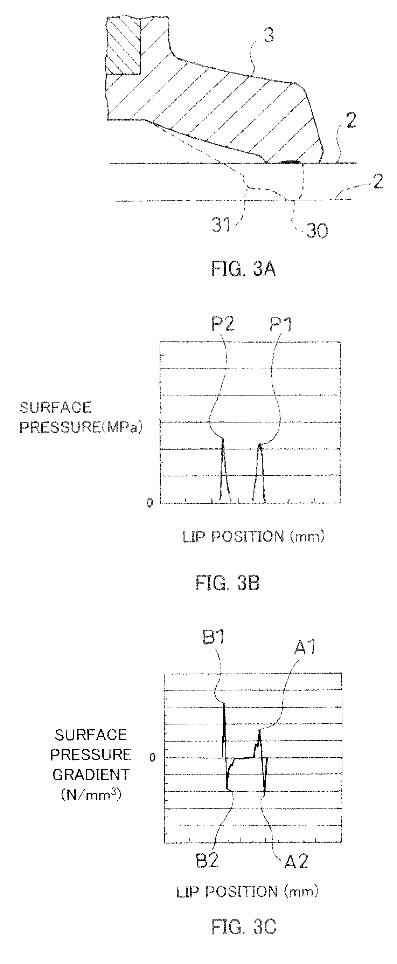

Further, as shown in broken line in FIG. 3A, the inner diameters of the main lip portion 30 and the auxiliary lip portion 31 are set to be smaller than the outer diameter of the piston rod 2, thereby providing interference. The main lip portion 30 and the auxiliary lip portion 31 are elastically deformed with a predetermined contact surface pressure when coming into contact with the outer peripheral surface of the piston rod 2 as shown in solid line in FIG. 3A.

FIG. 3B shows a relationship between lip position and surface pressure in the dust seal lip 3. As described above, when the main lip portion 30 and the auxiliary lip portion 31 are elastically deformed, surface pressure peaks respectively appear in parts where the main lip portion 30 and the auxiliary lip portion 31 are pressed into contact with the piston rod 2. In FIG. 3B, a right peak P1 is a peak of the surface pressure of the main lip portion 30 and a left peak P2 is a peak of the surface pressure of the auxiliary lip portion 31. Further, a part where the surface pressure is 0 due to no contact with the piston rod 2 is present between the main lip portion 30 and the auxiliary lip portion 31. This part is not in contact with the piston rod 2 over its entire surface from the main lip portion 30 to the auxiliary lip portion 31.

FIG. 3C shows a relationship between lip position and surface pressure gradient in the dust seal lip 3. The surface pressure gradient is obtained by differentiating the surface pressure of FIG. 3B.

In FIG. 3C, A1 denotes a maximum surface pressure gradient value in the main lip portion 30 and an absolute value thereof is a maximum value of a surface pressure gradient absolute value of the inner side (working fluid side) in the main lip portion 30. Further, A2 denotes a minimum surface pressure gradient value in the main lip portion 30 and an absolute value thereof is a maximum value of a surface pressure gradient absolute value of the outer side (atmosphere side) in the main lip portion 30. The main lip portion 30 is so set that the maximum value of the surface pressure gradient absolute value of the outer side is larger than that of the surface pressure gradient absolute value of the inner side.

In this way, the working fluid film formed during the compression stroke is made thinner than that formed during the expansion stroke by the main lip portion 30, wherefore the main lip portion 30 can prevent foreign substances adhering to the outer peripheral surface of the piston rod 2 from entering the cylinder 1.

In FIG. 3C, B1 denotes a maximum surface pressure gradient value in the auxiliary lip portion 31 and an absolute value thereof is a maximum value of a surface pressure gradient absolute value of the inner side (working fluid side) in the auxiliary lip portion 31. Further, B2 denotes a minimum surface pressure gradient value in the auxiliary lip portion 31 and an absolute value thereof is a maximum value of a surface pressure gradient absolute value of the outer side (atmosphere side) in the auxiliary lip portion 31. The auxiliary lip portion 31 is so set that the maximum value of the surface pressure gradient absolute value of the inner side is larger than that of the surface pressure gradient absolute value of the outer side.

In this way, the working fluid film formed during the extension stroke is made thinner than that formed during the compression stroke by the auxiliary lip portion 31, wherefore the auxiliary lip portion 31 can prevent the outflow of the working fluid in the space 8 to the outer side (atmosphere side).

Next, functions and effects of the sealing device according to this embodiment are described.

Since the dust seal lip 3 includes the main lip portion 30 and the auxiliary lip portion 31 and the maximum value of the surface pressure gradient absolute value of the inner side (working fluid side) in the auxiliary lip portion 31 is set to be larger than that of the surface pressure gradient absolute value of the outer side (atmosphere side), the outflow of the working fluid in the space 8 to the outer side (atmosphere side) can be prevented by making the working fluid film formed during the expansion stroke of the shock absorber D thinner than that formed during the compression stroke. Thus, even if an opening occurs in the high-friction oil seal, the auxiliary lip portion 31 can restrain the working fluid accumulated in the space 8 from being scraped out to the outer side (atmosphere side).

Further, since the dust seal lip 3 includes the auxiliary lip portion 31 that slides in contact with the outer peripheral surface of the piston rod 2 in addition to the main lip portion 30 for preventing the entrance of foreign substances by sliding in contact with the outer peripheral surface of the piston rod 2, the swinging behavior of the tip of the dust seal lip 3 that occurs due to a change in a lubricant state can be prevented.

Further, since the maximum value of the surface pressure gradient absolute value of the outer side (atmosphere side) in the main lip portion 30 is set to be larger than that of the surface pressure gradient absolute value of the inner side (working fluid side), the entrance of foreign substances adhering to the outer peripheral surface of the piston rod 2 into the cylinder 1 can be prevented by making the working fluid film formed during the compression stroke of the shock absorber thinner than that formed during the extension stroke.

Further, since the radius of curvature of the tip 31a of the auxiliary lip portion 31 is set to be shorter than 0.2 mm, the surface pressure on the auxiliary lip portion 31 can be peaked.

The embodiments of the present invention described above are merely illustration of some application examples of the present invention and not of the nature to limit the technical scope of the present invention to the specific constructions of the above embodiments.

For example, although the sealing device S has been described to be used in the shock absorber D for suspension of the automotive vehicle in the above embodiment, it may be used in another shock absorber or cylinder device.

Furthermore, the shape of the sealing device S is not limited to the one described above, and the spacing between the main lip portion 30 and the auxiliary lip portion 31, the inner angle between the outer inclined surface 31 b and the inner inclined surface 31c of the auxiliary lip portion 31, the radius of curvature of the tip 31a of the auxiliary lip portion 31 and the like can be appropriately changed according to the amount of deformation and the material of the dust seal lip 3.

The present application claims a priority based on Japanese Patent Application No. 2011-239845 filed with the Japan Patent Office on November 1, 2011, all the contents of which are hereby incorporated by reference.

## Claims

1. A sealing device adapted to seal an outer periphery of a shaft member movably inserted into a tubular member storing working fluid, comprising:
a dust seal lip arranged on an outer side of the tubular member to prevent the entrance of foreign substances; and
an oil seal lip arranged on an inner side of the tubular member to form a space for accumulating the working fluid between the oil seal lip and the dust seal lip and prevent the outflow of the working fluid; wherein
the dust seal lip includes a main lip portion and an auxiliary lip portion formed to be closer to the oil seal lip than the main lip portion; and
a maximum value of a surface pressure gradient absolute value of the inner side in the auxiliary lip portion is set to be larger than that of a surface pressure gradient absolute value of the outer side in the auxiliary lip portion.

2. The sealing device according to claim 1, wherein
the auxiliary lip portion is annularly formed and includes an outer inclined surface inclined from an inner peripheral tip of the auxiliary lip portion toward the outer side and an inner inclined surface inclined from the inner peripheral tip of the auxiliary lip portion toward the inner side; and
an angle of inclination of the outer inclined surface is set to be smaller than that of the inner inclined surface.

3. The sealing device according to claim 1, wherein
the auxiliary lip portion is annularly formed and a radius of curvature of an inner peripheral tip of the auxiliary lip portion is shorter than 0.2 mm.

4. A shock absorber with the sealing device according to claim 1, wherein
the shock absorber includes a cylinder for storing working fluid and a piston rod to be movably inserted into the cylinder and closes a clearance between the cylinder and the piston rod by the sealing device; and
the cylinder is the tubular member and the piston rod is the shaft member.
